# EUROPÄISCHE PATENTANMELDUNG

(11) **EP 2 789 520 A1**
(43) Veröffentlichungstag der Anmeldung: **15.10.2014**
(21) Anmeldenummer: 14162318.1
(22) Anmeldetag: 28.03.2014
(51) Int. Cl.: B61D 17/10, F16K 15/04

(54) **Entwässerungsstopfen für einen Schienenfahrzeugboden**

(30) Priorität: 11.04.2013 DE 102013206402
(71) Anmelder: Siemens Aktiengesellschaft, 80333 München (DE)
(72) Erfinder: Wanczura, Stefan, 45665 Recklinghausen (DE); Bißels, Stephan, 47638 Straelen (DE)

(57) **Zusammenfassung**

Die Erfindung betrifft ein Entwässerungsstopfen für einen Boden eines Schienenfahrzeugs, wobei der Entwässerungsstopfen ein Außengehäuse (1) aufweist, das in eine Öffnung im Boden des Schienenfahrzeugs einsetzbar ist und eine Innenbohrung (3) aufweist, in der ein Auftriebskörper (7, 26) zwischen zwei Dichtabschnitten (5, 6; 15, 16) der Innenbohrung (3) mit verringertem Durchmesser derart geführt ist, dass der Auftriebskörper (7, 26) in einer oberen Endstellung und in einer unteren Endstellung jeweils mit dem Außengehäuse (1) derart zur Anlage gelangt, dass der Boden nach außen hin gegenüber Druckbeaufschlagungen abgeschlossen ist, während der Auftriebskörper (7, 17) in einer Zwischenstellung zwischen der oberen und der unteren Endstellung einen Wasserabfluss durch die Innenbohrung (3) hindurch zulässt.

## Beschreibung

Die Erfindung bezieht sich auf einen Entwässerungsstopfen für einen Boden eines Schienenfahrzeugs.

Insbesondere bei Schienenfahrzeugen ist es erforderlich, eine Möglichkeit zu schaffen, gerade bodennahe Bereiche des Wagenkastens kontinuierlich zu entwässern. Dabei ist zu berücksichtigen, dass eine Dichtigkeit des Wagenkastens sicherzustellen ist. Dies ist insbesondere im Hochgeschwindigkeitsverkehr (HGV) von besonderer Bedeutung.

Zu diesem Zweck ist es bekannt, im bodennahen Bereich eines Wagenkastens eingeschweißte Hülsen oder Rohre vorzusehen, die mittels eines Entwässerungsstopfens druckdicht verschlossen werden. Sofern sich Flüssigkeit im bodennahen Bereich durch beispielsweise Kondensatbildung oder Eindringung von Reinigungsflüssigkeiten durch Undichtigkeiten eines Fußbodens sammelt, kann diese nicht ungehindert ablaufen, da der typischer Weise eingeschraubte Entwässerungsstopfen als Barriere wirkt und somit ein freies Abfließen von Flüssigkeiten unterbindet. Zum Ermöglichen einer Entwässerung ist es erforderlich, den Entwässerungsstopfen periodisch zu öffnen und damit angefallene Flüssigkeit abzuführen. Dies zieht jedoch einen erhöhten Wartungsaufwand nach sich. Zusätzlich besteht die Gefahr, dass vom Wartungspersonal vergessen wird, nach einer Entwässerung den Entwässerungsstopfen wieder anzuschrauben. Eine solche Vorgehensweise ist z.B. von dem Fahrzeug "Velaro RUS", Markteinführung 2009, bekannt. Dies ermöglicht zwar eine kontinuierliche Entwässerung, bewirkt aber gleichzeitig den Verlust einer Druckdichtigkeit des Schienenfahrzeugs.

Ausgehend hiervon liegt der Erfindung die Aufgabe zugrunde, den eingangs genannten Entwässerungsstopfen derart weiterzuentwickeln, dass mit vermindertem Wartungsaufwand, sowohl eine Entwässerung des bodennahen Bereichs des Schienenfahrzeugs, als auch eine Druckdichtigkeit des Fahrzeugs verwirklicht werden kann.

Diese Aufgabe wird bei dem Entwässerungsstopfen dadurch gelöst, dass der Entwässerungsstopfen ein Außengehäuse aufweist, das in eine Öffnung im Boden des Schienenfahrzeugs einsetzbar ist und eine Innenbohrung aufweist, in der ein Auftriebskörper zwischen zwei Dichtabschnitten der Innenbohrung mit verringertem Durchmesser derart geführt ist, dass der Auftriebskörper in einer oberen Endstellung und in einer unteren Endstellung jeweils mit dem Außengehäuse derart zur Anlage gelangt, dass der Boden nach außen hin gegenüber Druckbeaufschlagungen abgeschlossen ist, während der Auftriebskörper in einer Zwischenstellung zwischen der oberen und der unteren Endstellung einen Wasserabfluss durch die Innenbohrung hindurch zulässt.

Bei einem solchen Entwässerungsstopfen, eingebaut in den Boden eines Schienenfahrzeugs, bewegt sich der Auftriebskörper typischer Weise in vertikaler Richtung zwischen der oberen und der unteren Endstellung, bei denen jeweils eine Abdichtung nach außen vorliegt. Sofern keine zu entwässernde Flüssigkeit vorhanden ist, ruht der Auftriebskörper aufgrund seiner Schwerkraft in der unteren Endstellung und sorgt dort für eine Druckdichtigkeit des Schienenfahrzeugs. In dem unwahrscheinlichen Fall, dass der Außendruck derart bemessen ist, dass der Auftriebskörper nach oben in Richtung auf die oberen Endstellung gedrückt wird, ist das Schienenfahrzeug nur über einen Zeitraum nicht druckdicht, den der Auftriebskörper zum Zurücklegen des Weges von der unteren in die obere Endstellung benötigt.

Sofern die Innenbohrung mit Flüssigkeit beaufschlagt wird, die zu entwässern ist, verlässt der Auftriebskörper die untere Endstellung und öffnet ähnlich einem Ventil die nach außen weisende Seite der Innenbohrung, so dass die Flüssigkeit ablaufen kann. Nach vollständiger Entwässerung nimmt der Auftriebskörper seine ursprüngliche Position in der unteren Endstellung wieder ein, so dass Druckdichtigkeit gegeben ist.

Das Außengehäuse des Entwässerungsstopfens kann auswärts des oberen Dichtabschnitts kegelförmig erweitert sein. Dies hat den Vorteil, dass der obere Teil des Außengehäuses im eingebauten Zustand eine Art Mulde ausbildet, in die bodennahe Flüssigkeit gelangen kann.

Der Auftriebskörper kann als Kugel oder Hohlkugel ausgebildet sein, deren Durchmesser kleiner als der Durchmesser der Innenbohrung des Außengehäuses zwischen den zwei Dichtabschnitten ist. Dabei ist die Differenz zwischen dem Durchmesser der Innenbohrung und dem Durchmesser der Kugel so zu bemessen, dass auch mit abzuführenden Schmutzpartikeln an der Kugel vorbei durch die Innenbohrung nach außen gelangen können.

Alternativ zu der Kugelform kann der Auftriebskörper auch allgemein zylindrisch und an seinen Enden kegelstumpfförmig ausgebildet sein, wobei sein Durchmesser entfernt von den Enden kleiner als der Durchmesser der Innenbohrung des Außengehäuses zwischen den zwei Dichtabschnitten ist. Zum Zusammenwirken des Auftriebskörpers mit der Innenbohrung ist es günstig, dass die Dichtabschnitte der Innenbohrung mit verringertem Durchmesser an die Kegelstumpfform der Enden des Auftriebskörpers angepasst sind, so dass Druckdichtigkeit herstellbar ist.

Der Auftriebskörper kann Zentriernasen zur Führung des Auftriebskörpers in der Innenbohrung des Außengehäuses aufweisen**.** Dies bewirkt eine kontrollierte Bewegung des Auftriebskörpers zwischen den zwei Dichtabschnitten der Innenbohrung.

Der Auftriebskörper kann eine aus dem Außengehäuse herausragende axiale Verlängerung zu seiner Handhabung bei einer Montage aufweisen. Diese Verlängerung schließt sich dann an eines der Enden des eigentlichen Auftriebskörpers an.

Das Außengehäuse kann einteilig ausgebildet und in die Öffnung im Boden des Schienenfahrzeugs einklebbar sein. Alternativ dazu kann das Außengehäuse auch zweiteilig ausgebildet sein und einen Grundkörper, in dem der Auftriebskörper geführt ist, sowie eine in die Öffnung im Boden des Schienenfahrzeugs einschweißbare Hülse aufweisen, in der der Grundkörper axial eingesetzt und fixiert ist. Insbesondere kann der Grundkörper in die Hülse einschraubbar sein. Dies hat den Vorteil, dass der Auftriebskörper frei in die Innenbohrung des Grundkörpers einlegbar ist und durch Ausschrauben des Grundkörpers aus der Hülse ohne Zusatzwerkzeug wieder entnommen werden kann. Auch kann die Innenbohrung im Bereich des Grundkörpers bei Bedarf gereinigt werden. Zudem kann bei Beschädigung des Auftriebskörpers dieser in einfacher Weise ausgetauscht werden.

Die zwei Dichtabschnitte der Innenbohrung können im Bereich des Grundkörpers angeordnet sein. In diesem Fall ist bei der zweiteiligen Ausführung des Außengehäuses die Hülse an einer Abdichtung eines Fahrzeuginnenraums gegenüber der Umgebung des Fahrzeugs nicht beteiligt. Alternativ dazu kann einer der zwei Dichtabschnitte der Innenbohrung im Bereich des Grundkörpers und der andere im Bereich der Hülse angeordnet sein. Der Dichtabschnitt im Bereich der Hülse kann dann beispielsweise als Absatz ausgebildet sein, mit dem ein zugeordnetes Ende des Auftriebskörpers für Dichtzwecke zusammenwirkt.

Zur Erhöhung des Auftriebs des Auftriebskörpers kann es von Vorteil sein, wenn er einen inneren Hohlraum aufweist. Dies kann insbesondere dann erforderlich werden, das Material des Auftriebskörpers eine eher hohe Dichte aufweist.

Der Auftriebskörper kann aus elastischem Material hergestellt sein. Diese Variante für die Ausführung des Auftriebskörpers ist insbesondere vorteilhaft, wenn beide Dichtabschnitte im Bereich des Grundkörpers angeordnet sind. Ausführungsbeispiele der Erfindung werden nachfolgend unter Bezugnahme auf die Zeichnungen noch näher erläutert, wobei funktionsgleiche Komponenten mit denselben Bezugszeichen bezeichnet sind. Es zeigen:
- Figur 1: eine Querschnittsansicht eines Entwässerungsstopfens nach einer ersten Ausführungsform im eingebauten Zustand,
- Figur 2: eine Querschnittsansicht eines Entwässerungsstopfens nach einer zweiten Ausführungsform in eingebautem Zustand,
- Figur 3: eine Längsschnittansicht eines Auftriebskörpers zum Einsatz bei den Entwässerungsstopfen nach Figur 2,
- Figur 4: eine Querschnittsansicht des Auftriebskörpers nach Figur 3 entlang einer Linie IV-IV,
- Figur 5: eine perspektivische Schnittansicht eines Entwässerungsstopfens nach einer dritten Ausführungsform in eingebautem Zustand mit einem Auftriebskörper in einer unteren Endstellung,
- Figur 6: eine perspektivische Schnittansicht des Entwässerungsstopfens nach Figur 5 in eingebautem Zustand mit dem Auftriebskörper in einer oberen Endstellung,
- Figur 7: eine perspektivische, auseinandergezogene Ansicht des Entwässerungsstopfens nach den Figuren 5 und 6 in Kombination mit dem Boden eines Schienenfahrzeugs und
- Figur 8: eine auseinandergezogene Ansicht von Komponenten des Entwässerungsstopfens nach den Figuren 5 und 6.

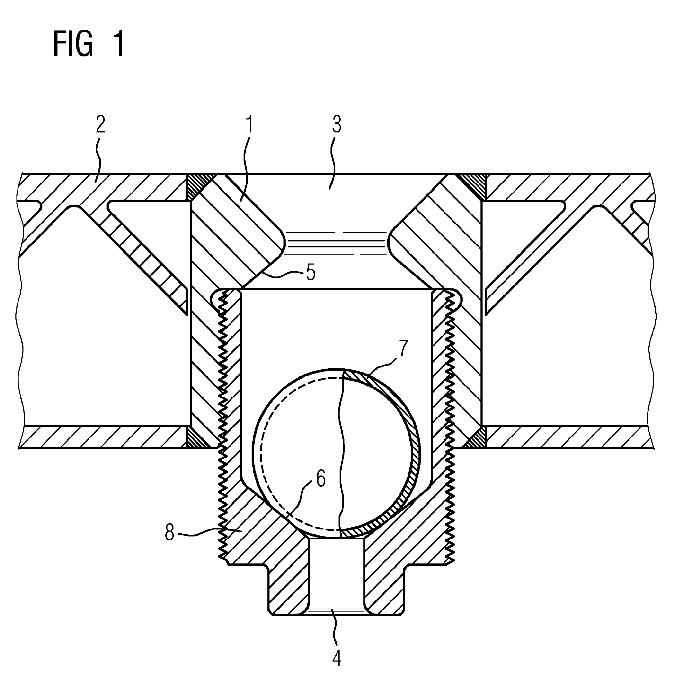

Die in Figur 1 veranschaulichte Ausführungsform eines Entwässerungsstopfens weist ein Außengehäuse 1 auf, das in eine Bodenplatte 2 eines Schienenfahrzeugs eingesetzt ist. Eine Innenbohrung 3 des Außengehäuses 1 erstreckt sich von einer Oberseite der Bodenplatte 2 aus bis zu einem Wasserablauf 4 an der Unterseite der Bodenplatte 2. Die Innenbohrung 3 verläuft von der Oberseite der Bodenplatte 2 aus zunächst schräg nach Innen, so dass das Außengehäuse 1 des Entwässerungsstopfens auswärts eines oberen Dichtungsabschnittes 5 kegelförmig erweitert ist. Im Anschluss daran steigt der Durchmesser der Innenbohrung 3 derart an, dass eine Kegelform des oberen Dichtabschnitts 5 verwirklicht wird. Vom unteren Ende des Dichtabschnitts 5 aus verläuft die Innenbohrung 3 an der Innenseite eines in das Außengehäuse 1 eingesetzten Grundkörpers 8 wiederum senkrecht zur Bodenplatte 2 und besitzt bis zum Erreichen eines oberen Endes eines unteren Dichtabschnitts 6 einen gleichbleibenden Durchmesser. Der untere Dichtabschnitt 6 ist wiederum kegelförmig ausgebildet, und zwar bis zum Erreichen des Wasserablaufs 4.

Innerhalb der Innenbohrung 3 ist eine frei bewegliche und als Auftriebskörper 7 wirkende Kugel angeordnet, deren Durchmesser geringer ist als der Durchmesser der Innenbohrung 3 im Bereich zwischen den beiden Dichtabschnitten. Gleichzeitig ist der Durchmesser der Kugel so gewählt, dass er die Innenbohrung 3 sowohl in seiner oberen Endstellung im Bereich des oberen Dichtabschnitts 5 als auch in seiner unteren Endstellung im Bereich des unteren Dichtabschnitts 6 möglichst druckdicht verschließt.

Wenn nun abzuführendes Wasser von der Oberseite der Bodenplatte 2 aus in die Innenbohrung 3 gelangt, wird der Auftriebskörper 7 von seiner unteren Endstellung aus, die er aufgrund seiner Schwerkraft einnimmt, nach oben bewegt und erreicht bei weiter nachfließendem Wasser den oberen Dichtabschnitt 5. Dann kann kein weiteres Wasser mehr von der Oberseite der Bodenplatte 2 aus nachfließen und der Entwässerungsstopfen verschließt die Innenbohrung 3.

Als Materialien für den Auftriebskörper 7 kommen Gummi, Schaumstoff o.ä. in Frage. Diese Materialien gewährleisten, dass die Kugel eine geeignete Druckabdichtung im Bereich der Dichtabschnitte 5, 6 bewirkt.

Im Bereich des oberen Dichtabschnitts 5 können zusätzlich Entwässerungsnuten 8 vorgesehen sein, wenn eine optimale Druckdichtigkeit im Bereich des oberen Dichtabschnitts 5 nicht erforderlich ist, jedoch eine freie Dauerentwässerung bei hohem Wasseranfall realisiert werden soll.

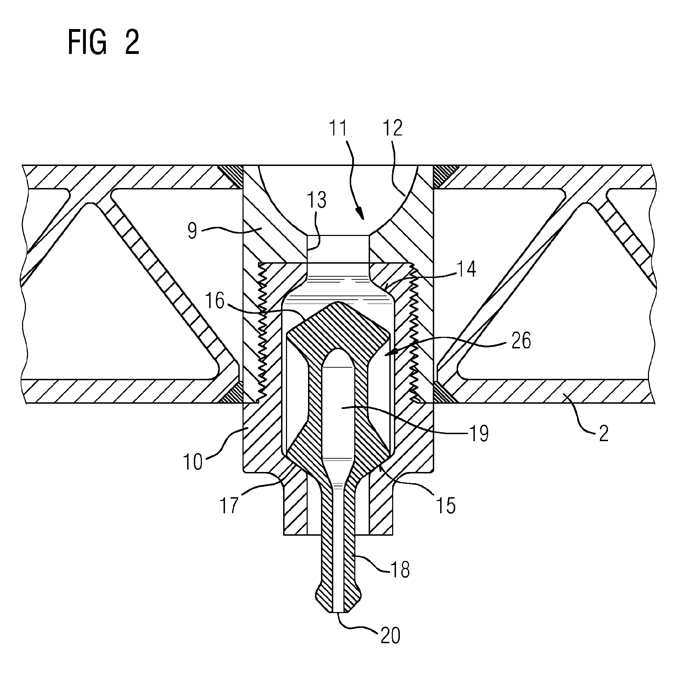

Figur 2 zeigt eine weitere Ausführungsform des Entwässerungsstopfens, bei der das Außengehäuse 1 zweiteilig ausgebildet ist. Senkrecht zur Bodenplatte 2 des Schienenfahrzeugs ist eine Hülse 9 vorgesehen, in die von der Unterseite der Bodenplatte 2 aus ein Grundkörper 10 eingeschraubt ist. In axialer Richtung des Entwässerungsstopfens schließen der Grundkörper 10 und die in die Bodenplatte 2 eingeschweißte Hülse 9 aneinander an und bilden gemeinsam eine Innenbohrung 11 aus. Von der Oberseite der Bodenplatte 2 aus ist die Innenbohrung 11 zunächst muldenförmig ausgebildet, woran sich in Richtung auf die Unterseite der Bodenplatte 2 ein Längsabschnitt mit festem Durchmesser anschließt. Am unteren Ende des Abschnitts mit festem Durchmesser 13 stößt der Grundkörper 10 gegen Anlageflächen der Hülse 9, wobei an diesem Übergang die Innenbohrung 11 kontinuierlich fortgeführt wird.

Am oberen Ende des Grundkörpers 10 findet sich ein oberer Dichtabschnitt 14, der kegelförmig ausgebildet ist. Demgegenüber weist der Grundkörper 10 an seinem nach außen gerichteten Ende einen unteren Dichtabschnitt 15 auf, der ebenfalls kegelförmig ausgebildet ist. Zwischen den beiden Dichtabschnitten 14, 15 hat die Innenbohrung 11 einen konstanten Durchmesser und in diesem Bereich wird ein Auftriebskörper 26 geführt, der allgemein länglich ausgebildet ist und an seinem oberen und seinem unteren Ende jeweils eine Kegelform aufweist, so dass die Voraussetzungen für eine Abdichtung gegenüber dem Grundkörper 10 an seinem der Hülse 9 zugewandten Ende als auch an seinem nach außen gerichteten Ende ermöglicht ist.

An seinem nach außen gerichteten Ende 17 zeigt der Auftriebskörper 26 eine an seinem Auftrieb nicht beteiligte axiale Verlängerung 18, die aus der Innenbohrung 11 für eine Montage des Auftriebskörpers 26 in dem Grundkörper 10 herausragt.

Die Funktionsweise des Auftriebskörpers 26 ist ähnlich der Ausführungsform als Kugel oder Hohlkugel, wie sie anhand von Figur 1 erläutert worden ist. Bei über die Mulde 12 eintretendes Wasser, gelangt der Auftriebskörper 26 an den oberen Dichtabschnitt 14 zur Anlage, so dass eine Abdichtung der Bodenplatte 2 erzielt wird. Sofern keine Flüssigkeit abzuführen ist, ruht der Auftriebskörper 26 in seiner unteren Endstellung im Bereich des Dichtabschnitts 15, was ebenfalls eine Abdichtung der Bodenplatte 2 zur Folge hat.

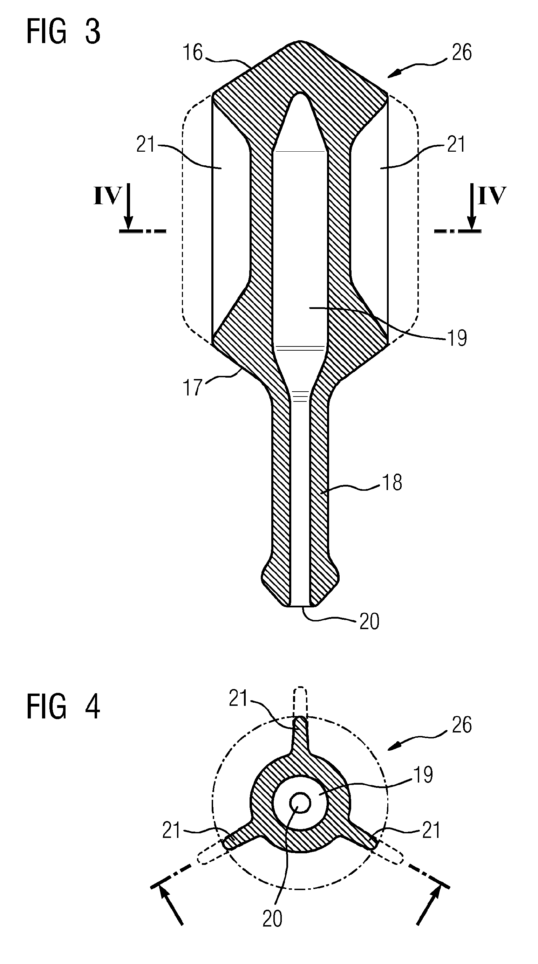

Aus Figur 3 geht die Form des Auftriebskörpers mehr im Detail hervor. Zwischen den beiden Enden 16, 17 verjüngt sich der Auftriebskörper 26, so dass er in einem mittleren Bereich zwischen den Enden 16, 17 zylindrisch ist und einen gleichbleibenden Durchmesser aufweist. Zur Erhöhung seines Auftriebs ist der Auftriebskörper 26 mit einem inneren Hohlraum 19 ausgestattet, der über eine Öffnung 20 am Ende der axialen Verlängerung 18 mit dem Außenbereich in Verbindung steht.

Zur Zentrierung des Auftriebskörpers 26 über den Längenabschnitt der Innenbohrung 11 zwischen den beiden Dichtabschnitten 14, 15 dienen Zentriernasen 21, die mehr im Detail in der Schnittdarstellung von Figur 4 erkennbar sind. In tangentialer Richtung des Auftriebskörpers 26 ist zwischen den einzelnen Zentriernasen 21 genügen Freiraum, so dass eine Entwässerung an dem Auftriebskörper 15 vorbei ermöglicht ist.

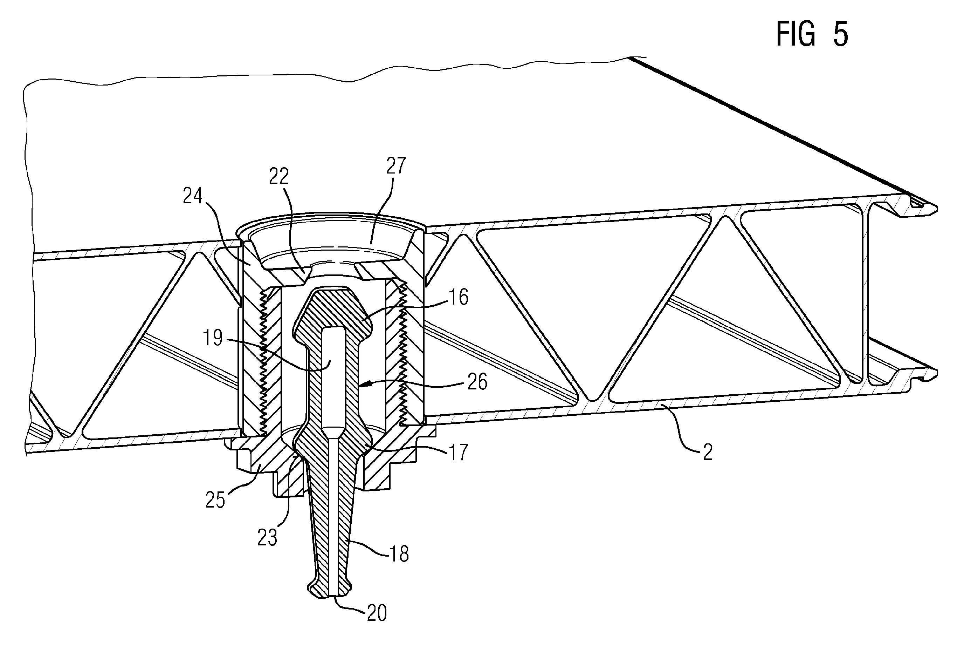

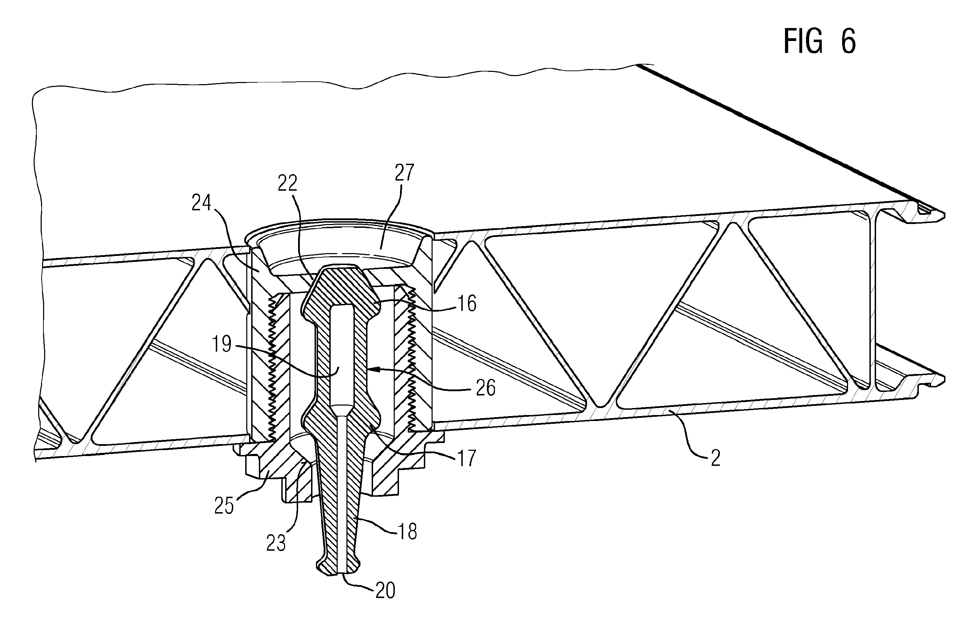

Die Anhand von Figur 5 veranschaulichte Ausführungsform eines Entwässerungsstopfens stimmt in wesentlichen Elementen mit derjenigen überein, die anhand von Figur 2 erläutert wurde. Ein wesentlicher Unterschied besteht jedoch darin, dass zwei Dichtabschnitte 22, 23 nunmehr auf eine Hülse 24 und einen Grundkörper 25 verteilt sind. Insofern schließt sich an eine Mulde 27 im Bereich der Oberseite der Bodenplatte 2 in Richtung auf die Unterseite unmittelbar der obere Dichtabschnitt 22 mit kegelförmig erweitertem Durchmesser an, so dass der Auftriebskörper 26 mit seinem oberen Ende 16 mit dem kegelförmigen Dichtabschnitt 22 der Hülse 24 zum Zweck einer Abdichtung zur Anlage gelangen kann. Insgesamt erstreckt sich daher der Grundkörper 25 im Vergleich zum Ausführungsbeispiel nach Figur 2 weiter in Richtung auf die Oberseite der Bodenplatte 2. Figur 5 zeigt den Auftriebskörper 26 in der unteren Endstellung, bei der er aufgrund seines Eigengewichts eine Abdichtung im unteren Dichtabschnitt bewirkt. Aus Figur 6 geht die obere Endstellung für den Auftriebskörper 26 hervor.

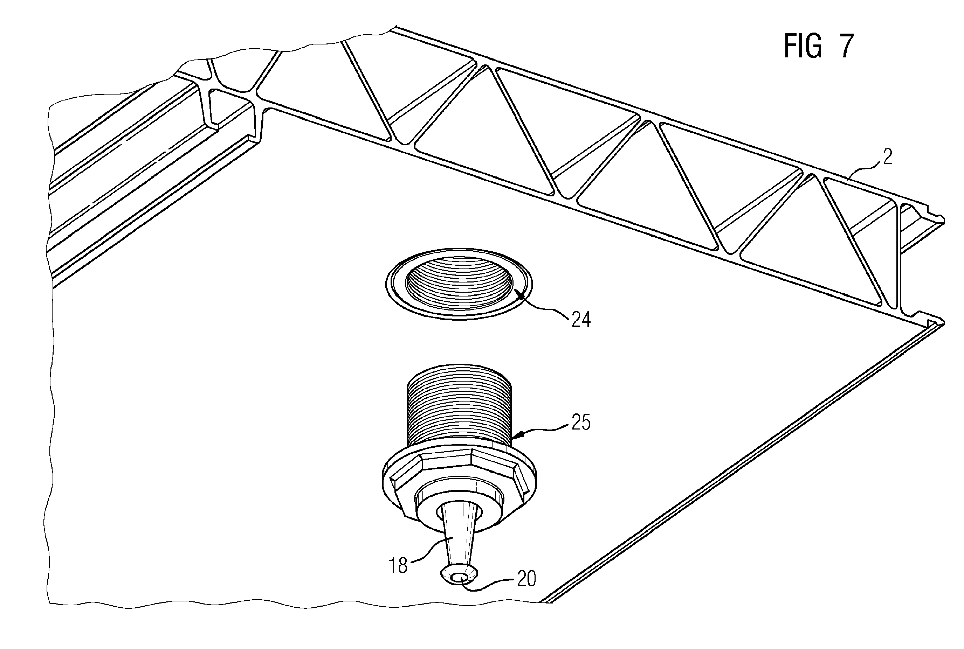

Figur 7 veranschaulicht, in welcher Weise der Entwässerungsstopfen montierbar ist. Die Hülse 24 ist mit Hilfe von Schweißen in die Bodenplatte 2 eingesetzt. Der Grundkörper 25 wird mit bereits darin angeordnetem Auftriebskörper 26 von unten in die Hülse 24 eingeschraubt. Selbstverständlich sind auch andere Fixierungsmöglichkeiten für den Grundkörper 25 gegenüber der Hülse 24 denkbar.

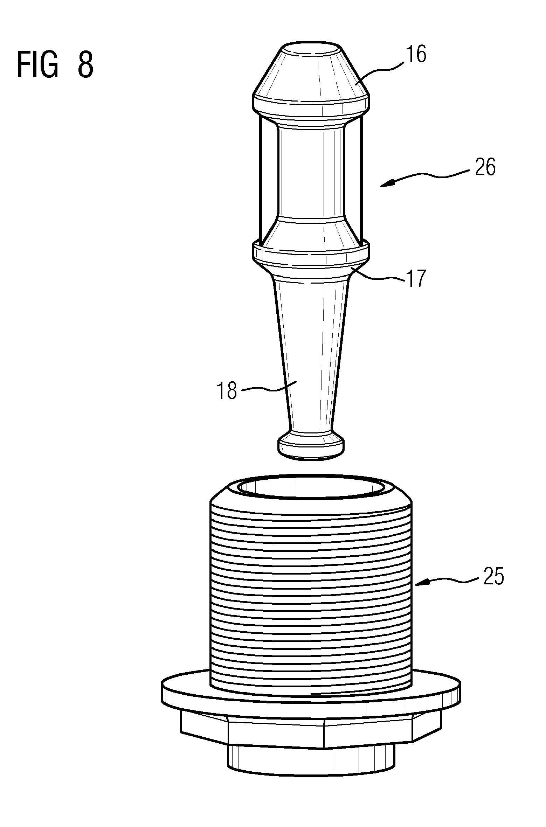

Figur 8 zeigt die Kombination aus dem Auftriebskörper 26 und dem Grundkörper 25 unmittelbar vor Einsetzen des Auftriebskörpers 26 in den Grundkörper 25.

## Patentansprüche

1. Entwässerungsstopfen für einen Boden eines Schienenfahrzeugs,
**dadurch gekennzeichnet, dass**
der Entwässerungsstopfen ein Außengehäuse (1) aufweist, das in eine Öffnung im Boden des Schienenfahrzeugs einsetzbar ist und eine Innenbohrung (3) aufweist, in der ein Auftriebskörper (7, 26) zwischen zwei Dichtabschnitten (5, 6; 14, 15) der Innenbohrung (3) mit verringertem Durchmesser derart geführt ist, dass der Auftriebskörper (7, 26) in einer oberen Endstellung und in einer unteren Endstellung jeweils mit dem Außengehäuse (1) derart zur Anlage gelangt, dass der Boden nach außen hin gegenüber Druckbeaufschlagungen abgeschlossen ist, während der Auftriebskörper (7, 26) in einer Zwischenstellung zwischen der oberen und der unteren Endstellung einen Wasserabfluss durch die Innenbohrung (3) hindurch zulässt.

2. Entwässerungsstopfen nach Anspruch 1,
**dadurch gekennzeichnet, dass**
das Außengehäuse (1) auswärts des oberen Dichtabschnitts kegelförmig erweitert ist.

3. Entwässerungsstopfen nach Anspruch 1 oder 2,
**dadurch gekennzeichnet, dass**
der Auftriebskörper (7) als Kugel ausgebildet ist, deren Durchmesser kleiner als der Durchmesser der Innenbohrung (3) des Außengehäuses (1) zwischen den zwei Dichtabschnitten (5, 6) ist.

4. Entwässerungsstopfen nach Anspruch 1 oder 2,
**dadurch gekennzeichnet, dass**
der Auftriebskörper (26) allgemein zylindrisch und an seinen Enden (16, 17) kegel- oder kegelstumpfförmig ausgebildet ist, wobei sein Durchmesser entfernt von den Enden kleiner als der Durchmesser der Innenbohrung (3) des Außengehäuses (1) zwischen den zwei Dichtabschnitten (14, 15, 22, 23) ist.

5. Entwässerungsstopfen nach Anspruch 4,
**dadurch gekennzeichnet, dass**
der Auftriebskörper (26) Zentriernasen (21) zur Führung des Auftriebskörpers (26) in der Innenbohrung (3) des Außengehäuses (1) aufweist.

6. Entwässerungsstopfen nach einem der Ansprüche 4 oder 5,
**dadurch gekennzeichnet, dass**
der Auftriebskörper (26) eine aus dem Außengehäuse (1) herausragende axiale Verlängerung (18) zu seiner Handhabung bei einer Montage aufweist.

7. Entwässerungsstopfen nach einem der Ansprüche 1 bis 6,
**dadurch gekennzeichnet, dass**
das Außengehäuse (1) einteilig ausgebildet und in die Öffnung im Boden des Schienenfahrzeugs einklebbar ist.

8. Entwässerungsstopfen nach einem der Ansprüche 1 bis 6,
**dadurch gekennzeichnet, dass**
das Außengehäuse (1) zweiteilig ausgebildet ist und einen Grundkörper (10, 25), in dem der Auftriebskörper (26) geführt ist, sowie eine in die Öffnung im Boden des Schienenfahrzeugs einschweißbare Hülse (9, 24) aufweist, in die der Grundkörper (10, 25) axial eingesetzt ist.

9. Entwässerungsstopfen nach Anspruch 8,
**dadurch gekennzeichnet, dass**
die zwei Dichtabschnitte (14, 15) der Innenbohrung (3) im Bereich des Grundkörpers (10) angeordnet sind.

10. Entwässerungsstopfen nach Anspruch 8,
**dadurch gekennzeichnet, dass**
einer der zwei Dichtabschnitte (22, 23) der Innenbohrung (3) im Bereich des Grundkörpers (25) und der andere im Bereich der Hülse (24) angeordnet sind.

11. Entwässerungstopfen nach einem der Ansprüche 1 bis 10,
**dadurch gekennzeichnet, dass**
der Auftriebskörper (26) einen inneren Hohlraum (19) aufweist.

12. Entwässerungsstopfen nach einem der Ansprüche 1 bis 11,
**dadurch gekennzeichnet, dass**
der Auftriebskörper (26) aus elastischem Material hergestellt ist.
